Europäisches Patentamt

European Patent Office

Office européen des brevets

(11) Publication number : **0 471 572 A1**

# EUROPEAN PATENT APPLICATION

(21) Application number : **91307521.4**

(22) Date of filing : **14.08.91**

(51) Int. Cl.⁵ : **G09B 17/00,** G09B 5/04,
G10L 5/04

(30) Priority : **17.08.90 IL 95406**

(43) Date of publication of application :
**19.02.92 Bulletin 92/08**

(84) Designated Contracting States :
**AT BE CH DE DK ES FR GB GR IT LI LU NL SE**

(71) Applicant : **EDU-TECH LTD**
**P.O. Box 11**
**Migdal Tefen 24959 (IL)**

(72) Inventor : **Hareli, Gadi**
**9 Haneviim Street**
**Herzlia 46465 (IL)**
Inventor : **Hareli, Nava**
**9 Haneviim Street**
**Herzlia 46465 (IL)**

(74) Representative : **Miller, Joseph et al**
**J. MILLER & CO. Lincoln House 296-302 High**
**Holborn**
**London WC1V 7JH (GB)**

(54) **Education device for teaching reading and writing skills.**

(57) An educational device for aiding the development of reading and writing skills, comprising a plurality of symbol blocks each having an alphabetic symbol representing a predetermined consonant-vowel combination on at least one surface thereof and having associated with each surface bearing a symbol thereon a respective predetermined encoding means. Also provided is a casing containing a plurality of receptacles each for displaying a surface of a respective one of the symbol blocks inserted therein, and a plurality of decoding means within the casing each associated with a respective one of the receptacles and responsive to the encoding means of the symbol block inserted therein for generating a code corresponding to the alphabetic symbol appearing on the displayed surface of the symbol block. Each receptacle is scanned in turn at a preselected speed depending on the proficiency of the user, so as successively to couple a synthesizing means to each of the decoding means for synthesizing a sound corresponding to the alphabetic symbol represented by the code in response to the generated code. The resulting sound is reproduced audibly by an audio output means coupled to the voice synthesizing means.

EP 0 471 572 A1

Fig.1

## FIELD OF THE INVENTION

This invention relates to an educational device and especially such a device for teaching reading and writing skills. It is particularly suited for young children at an early stage of learning and for disabled students including those suffering from dyslexia.

## BACKGROUNG OF THE INVENTION

During the early development of reading and writing skills, it is important for a student to be able to recognize the basic phonemic combinations which constitute a word. Once the basic phonemic combinations are grasped, the student will learn how to recognize relatively more complicated words as the concatenation of simpler primitives.

In some languages, such as Hebrew or Arabic, for example, a phoneme is constituted by a single consonantvowel combination represented by a consonant associated with a vowel marking. In Latin languages, a phoneme is represented by one or more consonants in combination with a vowel. In either case, by associating a particular consonant or group of consonants with a different vowel, different phonemes are created each having its own characteristic sound.

Electronic games or teaching aids for improving reading skills have generally so far related to so-called "talking books" or to electronic dictionaries. Thus, for example, U.S. Patent No. 4,778,391 (Weiner) discloses an educational device, particularly a book, which comprises a memory having recorded therein digital data representing sounds corresponding to each page of the book. Means are provided for selecting a particular page, whereby the respective contents of the memory are reproduced so that a child can actually hear the contents of the selected page.

It will be clear that in such a device, the child has no control other than to determine which page is to be "read". The device is therefore of little benefit as an educational tool permitting the child to determine how each individual word sounds. Furthermore, no facility is provided for writing a desired word and for determining how the written word sounds.

Also known is an electronic dictionary marketed by Texas Instruments, Inc. under the trade name " Speak and Spell" which permits a student to enter a desired word at a touch keyboard and to hear how the word sounds. The device also indicates vocally whether the word has been entered correctly. Whilst such a device does provide a measure of feedback relating to the correctness of the complete word, it does not indicate to the student where he has gone wrong in the event that a,word is misspelt. Thus, the device indicates the sound only of the complete word and not of each component syllable it is entered.

It would clearly be desirable to provide an electronic teaching device wherein a student is provided with an immediate feedback as to how each consonant-vowel combination of a word sounds as it is entered, as well as how the combination of the current and previous consonant-vowel combinations sounds. Such a device would permit a student to assess interactively whether he is entering correctly a word whose sound he already knows but which he is unsure how to write.

Additionally, such a device would find use for self-learning without supervision and would be a useful aid for disabled students for whom hitherto proposed teaching aids are largely unsuitable.

## SUMMARY OF THE INVENTION

It is an object of the invention to provide an educational device for aiding the development of reading and writing skills, by means of which a student can interactively construct words from known primitives and immediately hear how the entered sequence of primitives sounds.

According to the invention there is provided an educational device for aiding the development of reading and writing skills, characterised by:

a plurality of symbol blocks each having an alphabetic symbol representing a predetermined consonant-vowel combination on at least one surface thereof and having associated with said at least one surface a respective predetermined encoding means,

a casing containing a plurality of receptacles each for displaying a surface of a respective one of said symbol blocks inserted therein,

a plurality of decoding means within the casing each associated with a respective one of the receptacles and responsive to the encoding means of the symbol block inserted therein for generating a code corresponding to the alphabetic symbol appearing on the displayed surface of the symbol block,

voice synthesizing means for coupling to a selected one of the decoding means and responsive to the code generated thereby for synthesizing a sound corresponding to the alphabetic symbol represented by said code,

scanning means for successively coupling each of the decoding means to the voice synthesizing means, and

audio output means coupled to the voice synthesizing means for reproducing the sound audibly.

In accordance with this embodiment, the alphabetic symbol is a consonant-vowel combination, such as "CA", "CO", "CE" and so on, for example, where Latin script is used.

The symbol blocks may be substantially cuboid, having an alphabetic symbol displayed on each of its six faces or, alternatively, may be card-shaped, an alphabetic symbol being shown on at least one side thereof. For languages where many different vowel sounds may be associated with any given consonant, the symbol blocks may be polyhedral having a plurality of facets each bearing a different consonant-vowel combination.

Using such a device, a student is able to construct words by inserting several symbol blocks into adjacent receptacles, whereby the sound of each sequence of consonant-vowel combinations in the word is reproduced by the audio output means as symbol blocks are successively added.

According to one preferred embodiment of the invention, the voice synthesizing means is at least partially contituted by a microprocessor having a memory containing an instruction set associated therewith. Preferably, the memory contains a dictionary relating to one or more languages, there being associated with each language or group of languages a set of pronunciation rules defining how different consonant-vowel combinations sound according to their context in a particular word or part thereof.

Such an embodiment is completely flexible and may be adapted for use with any language, regardless of the consistency with which identically written consonant-vowel combinations are pronounced in different words or contexts. Such adaptation is effected merely by changing the software for controlling the microprocessor.

Preferably, a respective light is illuminated as each symbol block is inserted into a receptacle, thereby giving the student an immediate connection between the phoneme shown on the symbol block and the corresponding sound produced by the synthesizing means.

## BRIEF DESCRIPTION OF THE DRAWINGS

The invention will now be described, by way of non-limiting example only, with reference to the accompanying drawings, in which:

**Fig. 1** is a block diagram showing functionally a device according to the invention;

**Fig. 2** is a circuit diagram showing schematically the system illustrated in Fig. 1;

**Fig. 3** is a pictorial representation showing a detail of a first embodiment of the invention;

**Fig. 4** is a pictorial representation of an alternative symbol block for use in a second embodiment wherein each alphabetic symbol is magnetically encoded;

**Fig. 5** is a pictorial representation showing an arrangement for decoding the symbol block illustrated in Fig. 4;

**Fig. 6** shows a perspective view of a detail of a decoding means for use with a third embodiment according to the invention;

**Fig. 7** is an elevation of the arrangement illustrated in Fig. 6 showing schematically how the decoding means functions;

**Fig. 8** shows schematically a detail of a symbol block for use in the embodiment illustrated in Fig. 6;

**Fig. 9** is a pictorial representation of a fourth embodiment according to the invention;

**Fig. 10** is a pictorial representation of a symbol block for use in the device shown in Fig. 9;

**Fig. 11** is a part sectional elevation along the line XI-XI in Fig. 9 showing a detail of a decoding means for use therewith;

**Fig. 12** is a block diagram showing functionally an alternative device according to the invention;

**Fig. 13** is a flow diagram showing the principal operating steps associated with a fifth embodiment of the invention relating to the device shown in Fig. 12; and

**Fig. 14** is a flow diagram showing the principal operating steps associated with a sixth embodiment of the invention relating to the device shown in Fig. 12.

## DETAILED DESCRIPTION OF PREFERRED EMBODIMENT

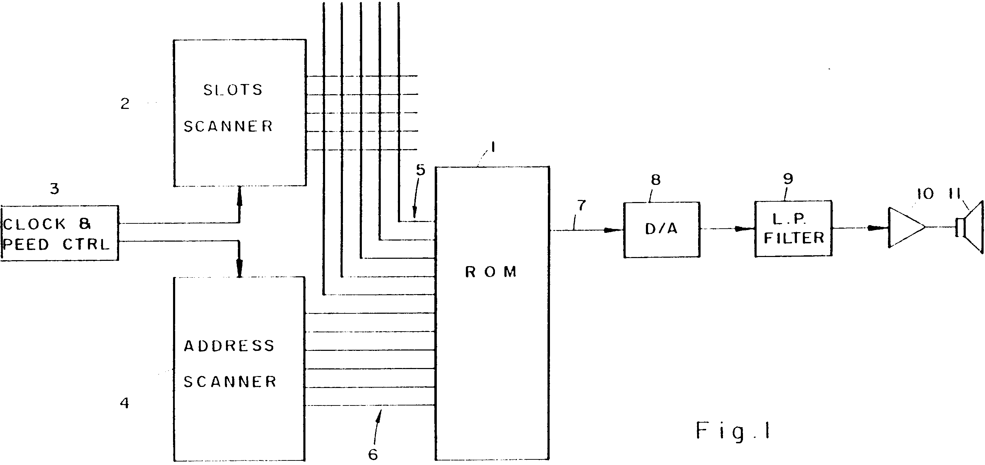

Referring to Fig. 1 there is shown schematically a system according to the invention including a read only memory (ROM) 1 in which is stored a plurality of digital sampled representations each corresponding to a specific cosonant-vowel combination.

A first embodiment of the invention will now be described for use with the Hebrew language. The Hebrew alphabet contains twenty-two consonants (several of which are depicted differently when appearing at the end of a word ) and six basic vowel signs. Thus, in Hebrew the vowel signs are not themselves alphabetic characters but, rather, are separate symbols which may be associated with any of the alphabetic characters all of which are themselves consonants. The six basic vowel sounds correspond to "o" as in "dog", "a" as in "cat", "oo" as in "food", "e" as in "bed", "i" as in "dig" and "u" as in "dug". When any of the vowel sounds are combined with an alphabetic consonant, the sound of the resulting consonant-vowel combination is known regardless of its context.

Hebrew words comprise several alphabetic consonants, with some or all of which are associated vowel signs. Each Hebrew alphabetic symbol, constituted by a letter and associated vowel sign, has a unique vocal representation. The resulting sound of the complete word or of a part of the word is therefore easily determined as the concatenation of the sounds associated with each of the consonant-vowel combinations formed by a consonant-vowel combination.

This, of course, is not always the case in English where, for example, the vowel combination "ou" is sounded differently in the word "found", "hour", "trough" and "enough".

Relating then to the Hebrew language, the ROM 1 stores digital representations of all of the twenty-two consonants each associated with each of the six vowel sounds. Several different consonant-vowel combinations have identical sounds and consequently the 132 alphabetic symbols can be associated with only 120 different sounds. Thus, the ROM 1 stores some 120 different digital sound representations. The manner in which the sound representations are produced is not a feature of the invention, it being necessary merely to understand that each representation comprises a plurality of digital data produced by sampling an analogue waveform at a predetermined sampling frequency. Thus, the ROM 1 is divided into discrete areas each of which contains the digital representation of a specific consonant-vowel combination and is read by sequentially addressing each of the memory locations within the desired area.

The frequency at which the memory locations within the ROM 1 are accessed should correspond to the frequency at which the original analogue waveform corresponding to the sound of the consonant-vowel combination was sampled.

Having explained the manner in which data within the ROM 1 is organised, the remainder of the circuit shown in Fig. 1 will now be described.

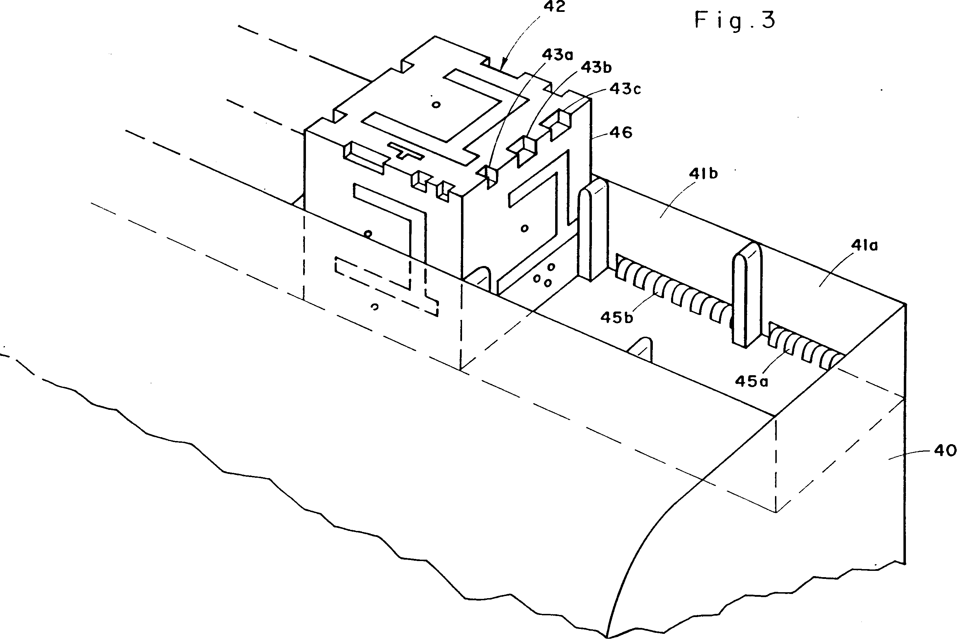

A SLOTS SCANNER 2 (constituting a scanning means) scans a plurality of receptacles (see Fig. 3) each of which may contain a symbol block depicting an alphabetic symbol. The scan rate is determined by a CLOCK AND SPEED CONTROL circuit 3 which also provides timing signals to an ADDRESS SCANNER 4. The SLOTS SCANNER 2 and the ADDRESS SCANNER 4 are coupled to the ROM 1, the SLOTS SCANNER 2 providing the high address bits in an address bus 5 and the ADDRESS SCANNER 4 providing the low address bits in an address bus 6. Thus, the address buses 5 and 6 provide in combination a memory address corresponding to a digitised sample of an analogue sound waveform corresponding to the alphabetic symbol currently scanned by the SLOTS SCANNER 2.

The data is so organised within the ROM 1, that the high address bus 5 is constant for a specific alphabetic symbol, only the low address lines 6 varying according to the scan frequency of the CLOCK 3.

Thus, the ADDRESS SCANNER 4 scans all the addresses in ROM 1 corresponding to the alphabetic symbol defined by the high address bus 5, each word in memory being fed sequentially to an output data bus 7 coupled to a D/A (digital-to-analogue) CONVERTER 8.

The output of the D/A CONVERTER 8 is filtered by a LOW PASS FILTER 9 whose output is fed to an amplifier 10 coupled to a loudspeaker 11.

In such an arrangement, the D/A CONVERTER 8 converts each word appearing on the data bus 7 to an equivalent analogue representation, so that a sequence of analogue signals each corresponding to a sampled point on the sound waveform is fed to the LOW PASS FILTER 9. The LOW PASS FILTER 9 effectively filters out discontinuities between the analogue samples so that a continuous analogue waveform corresponding to the originally sampled analogue sound wave-form is amplified by the amplifier 10 and reproduced by the loudspeaker 11.

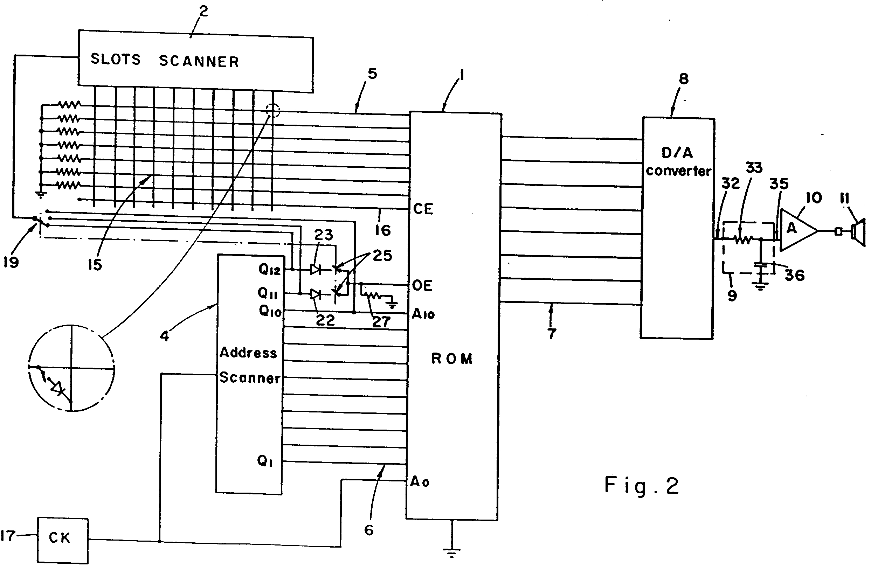

Referring now to Fig. 2 of the drawings there is shown in more detail a circuit diagram of the system described above with reference to Fig. 1 of the drawings. To the extent that the elements appearing in Fig. 2 are equivalent to those shown in Fig. 1, identical reference numerals will be used.

The SLOTS SCANNER 2 includes a conventional diode matrix 15 shown schematically in the figure. The diode matrix 15 is shown having seven output lines constituting the HIGH ADDRESS BUS 5, an additional output 16 being connected to the CHIP-ENABLE (CE) input of the ROM 1 for enabling the ROM 1 when a symbol block is present in the receptacle currently being scanned by the SLOTS SCANNER 2. This prevents the ROM 1 from being accessed in respect of a receptacle containing no symbol block so as to prevent any audible signal being output. This also minimises electrical power consumption, since both ROM access and the audio output are relatively power consuming.

The ADDRESS SCANNER 4 comprises a conventional binary counter driven by a clock 17. The clock 17 produces a clock signal which is fed to the ADDRESS SCANNER 4 and also to the least significant address line $A_0$ of the ROM 1. The frequency of the clock signal is equal to twice the frequency at which the analogue sound waveforms were originally sampled. The ADDRESS SCANNER 4 has twelve output lines, the ten least significant of which constitute address lines $A_1$ to $A_{10}$ of the ROM 1. The eleven address lines $A_0$ and $A_{10}$ of the ROM 1 constitute the LOW ADDRESS BUS 6.

The three most significant bits $Q_{12}$, $Q_{11}$ and $Q_{10}$ of the ADDRESS SCANNER 4 are connected to respective terminals of a selector switch 19 which, together with the CLOCK 17, switch 25, diodes 22 and 23 and resistor 27 constitute the CLOCK AND SPEED CONTROL 3 shown in Fig. 1. The selector switch 19 is connected to the SLOTS SCANNER 2 for providing timing signals according to which of the lines $Q_{10}$, $Q_{11}$ or $Q_{12}$ is connected thereto. Line $Q_{10}$ is connected directly to the address input $A_{10}$ of the ROM 1, whilst lines $Q_{11}$ and $Q_{12}$ are connected via respective diodes 22 and 23 to an OUTPUT ENABLE pin of the ROM 1 via a selector switch 25. The selector switches 19 and 25 are ganged so that when the selector switch 19 is connected to either the $Q_{12}$ or $Q_{11}$ of the ADDRESS SCANNER 4, the selector switch 25 connects the pin OE to the diode 23 or 22, respectively. When the selector switch 19 is coupled to the output $Q_{10}$ of the ADDRESS SCANNER 4, the selector switch 25 is disconnected from both of the diodes 22 and 23 and the pin OE is held at the correct logic level by means of a resistor 27, so as to be continuously enabled.

The operation of the speed control circuit constituted by the selector switches 19 and 25 relies on the fact that the pulse appearing at the output $Q_{10}$ of the ADDRESS SCANNER 4 has a frequency twice as large as that appearing at the output $Q_{11}$ which, in turn, has a frequency twice as large as that appearing at the output $Q_{12}$. Thus, by deriving the timing signal for the SLOTS SCANNER 2 from a selected one of the outputs $Q_{10}$, $Q_{11}$ or $Q_{12}$ of the ADDRESS SCANNER 4, the rate at which symbol blocks inserted into the SLOTS SCANNER 2 are scanned may be varied by a factor of 1:2:4. The OUTPUT ENABLE pin OE of the ROM 1 permits the ROM 1 to be disabled for part of the duty cycle when the scan frequency is lowered. If this were not done, the sound associated with the symbol block currently being scanned would be repeated since the ADDRESS SCANNER 4 operates at a constant frequency regardless of the frequency at which the receptacles are scanned.

The digital data read from the ROM 1 and appearing on the data bus 7 is converted to a corresponding analogue level by means of the D/A CONVERTER 8 whose output is fed through a resistor 33 to an input 35 of the amplifier 10. The input 35 is connected to ground GND via a capacitor 36. The resistor 33 and the capacitor 36 constitute the LOW PASS FILTER 9 shown in Fig. 1.

The operation of the circuit shown in Fig. 2 has already been explained with reference to Fig. 1 of the drawings. It will be clear from the foregoing description that the ROM 1 functions as a simple sequence generator which constitutes a voice synthesizing means whilst the diode matrix 15 is a conventional encoder matrix. The speed control circuit operated by the ganged selector switches 19 and 25 permits the speed with which the receptacles are scanned, and hence the speed at which a sequence of sounds corresponding to displayed alphabetic symbols is vocalised, to be varied. This feature permits students to increase the scan speed as they become more familiar with the pronunciation of displayed words, or parts thereof.

Referring now to Fig. 3 of the drawings there is shown pictorially a detail of a first embodiment according to the invention. The circuit described above with reference to Figs. 1 and 2 of the drawings is enclosed within a casing 40 containing a plurality of receptacles 41a, 41b, etc. for inserting therein corresponding symbol blocks 42. The symbol block 42 is substantially cuboid and on each face thereof is displayed an alphabetic symbol constituting a consonant-vowel combination.

The symbol block 42 shows Hebrew language characters displaying the second letter of the Hebrew alphabet *Bet* associated with each of the six vowel signs *qamatz, segol, shuruq, holam, hiriq* and *sheva*.

Six of the edges of the symbol block 42, corresponding to the six faces thereof, are provided with recesses such as shown at 43a, 43b and 43c constituting a predetermined encoding means whose function will shortly be described.

Mounted within each receptacle 41a, 41b etc. is a plurality of resilient switching means 45a, 45b etc. whose state is adapted to be changed upon pressure by a rear face 46 of the symbol block 42. The recesses 43a, 43b and 43c within the corresponding surface of the symbol block 42 accommodate therein corresponding ones of the switches 45a, 45b etc. so that the status of those switches accommodated within the recesses 43a, 43b, 43c etc. remains unaltered even when the symbol block 42 is inserted into the receptacles 41a, 41b etc. Thus, by varying the arrangement of the recesses 43a, 43b, 43c etc., different ones of the switches 45a, 45b etc. will be operated for each different displayed alphabetic symbol.

Since, in the Hebrew alphabet there are twenty-two consonants and six different vowel sounds, there are altogether 132 consonant-vowel combinations. However, as explained above, some of these may be eliminated enabling all of the significant consonant-vowel combinations to be encoded by means of seven two-state switches allowing $2^7$, i.e. 128 combinations. It will be appreciated that the switches 45a, 45b etc. correspond to the diode encoder matrix 15 described above with reference to Fig. 2 of the drawings.

In the arrangement shown in Fig. 3 of the drawings only one symbol block is shown for reasons of clarity. In fact, a student using the device would insert a first symbol block into the first rightmost receptacle 41a (since Hebrew reads from right to left) and would add subsequent symbol blocks to adjacent receptacles. On entering one or more symbol blocks into the corresponding receptacles, the SLOTS SCANNER 2 upon scanning a receptacle having a symbol block therein generates a CHIP-ENABLLE signal which causes the memory locations within the ROM 1 addressed by the combined high and low address buses 5 and 6, respectively, to appear on the output data bus 7. As has been explained previously, the high address bus 5 is a predetermined function of the alphabetic symbol currently decoded by the SLOTS SCANNER 2, whilst the low address bus 6 is sequentially incremented by the ADDRESS SCANNER 4 so that all of the addresses associated with the displayed alphabetic symbol may be accessed and their corresponding data fed to the D/A CONVERTER 8.

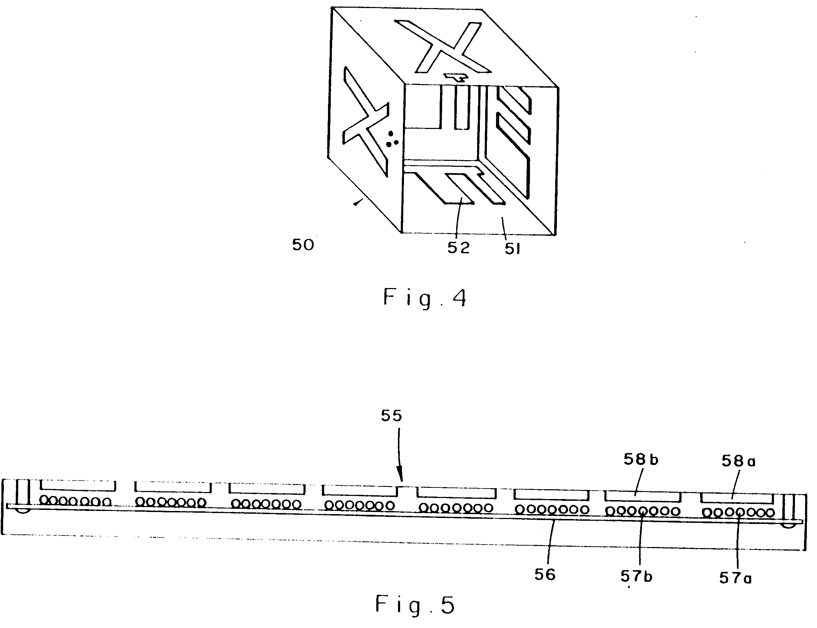

The recesses 43a, 43b and 43c constituting the encoding means in Fig. 3 detract from the surface quality of the symbol block 42 and require a relatively complicated casing construction. Therefore, there is shown in Fig. 4 of the drawings an alternative symbol block 50 for use with a second embodiment according to the invention. The symbol block 50 comprises a simple hollow plastics moulding having on respective inside surfaces thereof such as 51 a corresponding pattern 52 formed of a magnetic material. The pattern 52 constitutes an encoding means which is different for each alphabetic symbol which requires encoding.

Fig. 5 shows schematically a decoder designated generally by 55 for use with the symbol block 50 shown in Fig. 4. The decoder 55 comprises a printed circuit board 56 mounted on which are respective pluralities of reed switches or Hall effect switches 57a, 57b etc. aligned with corresponding receptacles 58a, 58b etc. for accommodating therein respective symbol blocks 50.

It will be apparent that the pattern 52 encodes the alphabetic symbol depicted on the opposite outer surface of the symbol block 50 such that when the symbol block 50 is inserted into one of the receptacles 58a, 58b etc., the status of each of the reed or Hall effect switches 57a, 57b etc. is changed according to the presence or absence of a magnetic field produced by magnetic material within the pattern 52. Thus, the pattern 52 may be configured to operate respective ones of the reed or Hall effect switches 57a, 57b etc. so that each consonant-vowel combination generates a unique code.

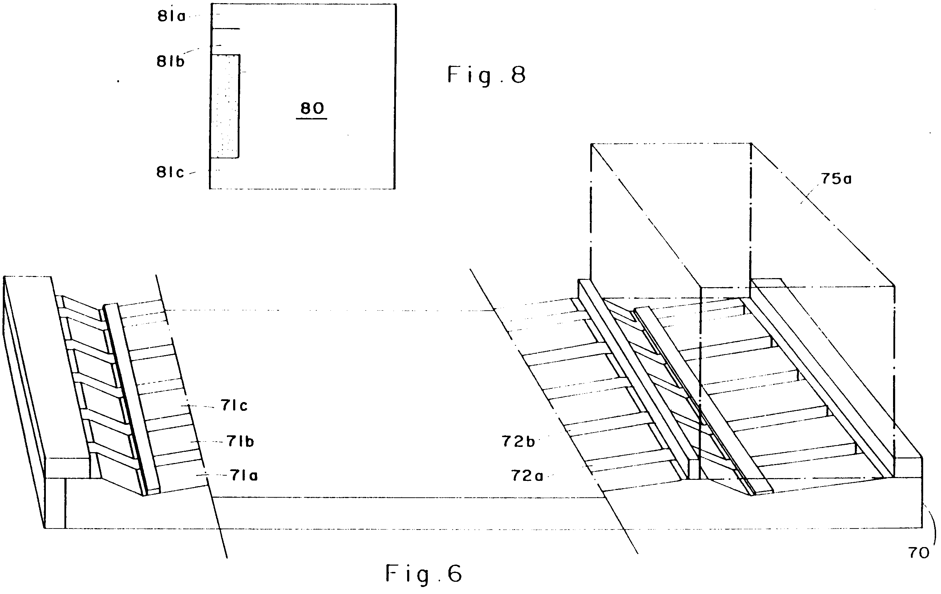

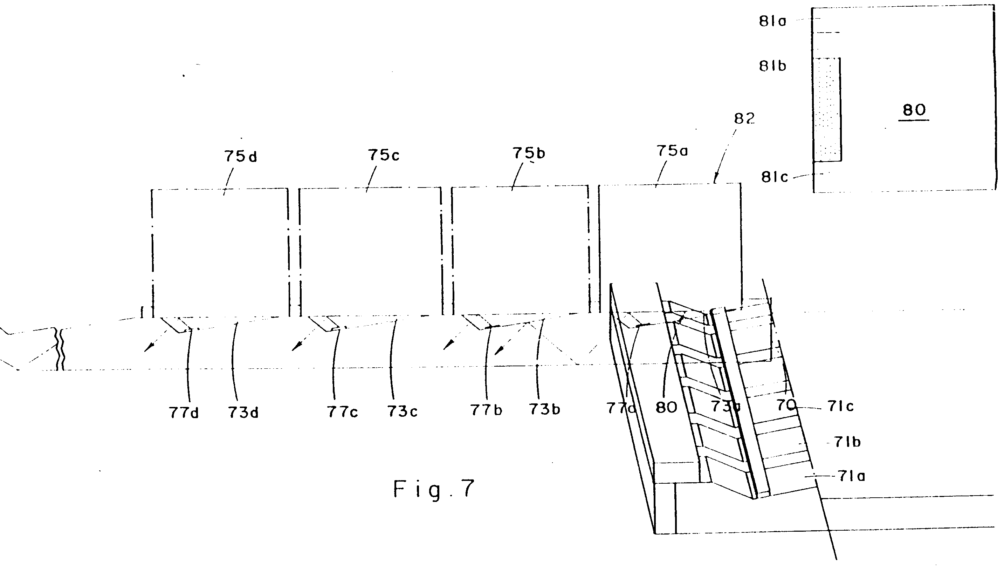

Referring to Figs. 6, 7 and 8 of the drawings there is shown a third embodiment according to the invention utilising optical encoding and decoding means. Thus, there is shown a casing 70 formed from a block of light transmissive material such as perspex and having therein a plurality of spaced apart light channels 71a, 71b, 71c etc. disposed longitudinally within casing 70. Longitudinal slots 72a, 72b etc. are formed within the casing 70 so as to separate the light channels 71a, 71b, 71c from one another and permitting an outer surface of the light channels 71a, 71b, 71c adjoining the slots 72a, 72b etc. to be painted with a light reflective material so that the light channels 71a, 71b, 71c are able to transmit light therethrough by total internal reflection.

The casing 70 is so moulded as to form therein a plurality of receptacles 73a, 73b, 73c, 73d etc. each for accommodating therein a respective symbol block 75a, 75b, 75c, 75d etc. each bearing a different alphabetic symbol on each of its six faces.

At the end of each of the light channels 71a, 71b, 71c etc. there is provided a photo-electric detector, such as 76 for receiving light transmitted thereto through the corresponding light channel and producing an electrical signal in response thereto. Within each receptacle 73a, 73b etc. there is provided a light source, such as a small LED light-bar or an electroluminescent lamp 77a, 77b, 77c, 77d etc. disposed transversely within respective receptacles.

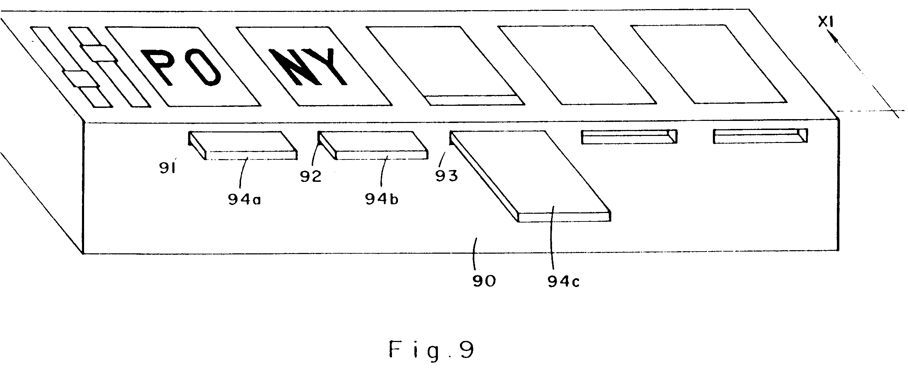

Fig. 8 shows a lower surface 80 of the symbol block 75a having thereon a series of light reflecting or absorbing areas 81a, 81b and 81c arranged in a predetermined pattern and constituting an encoding, means for encoding an alphabetic symbol appearing on a top surface 82 of the symbol block 75a. Each of the 120 different sounds are encoded by means of a corresponding, unique pattern of light reflective areas.

The operation of the device will now be explained. Each of the light sources 77a, 77b etc. is responsively coupled to the SLOTS SCANNER 2 (Figs. 1 and 2) so as to be successively connected to a source of electrical energy thereby and produce a flash of light. The light produced by the light source 77a, for example, strikes the lower surface 80 of the symbol block 75a and is reflected only from those areas of the lower surface 80 coated with the light reflective strips 81a, 81b and 81c. Upon striking the light reflective strips 81a, 81b and 81c, there is reflected therefrom corresponding reflected beams of light which enter the corresponding light channels such as 71a, 71b etc. and are propagated therethrough so as to strike corresponding ones of the photo-electric detectors such as 76.

Since there is a corresponding photo-electric detector associated with each of the light channels 71a, 71b, 71c etc., the photo-electric detectors are selectively energised in direct correspondence to a pattern of light reflective strips 81a, 81b and 81c on the lower surface 80 of the symbol block 75a. Thus, by considering the outputs of each of the photo-electric detectors (i.e. HIGH or LOW), a different binary code is produced for each symbol appearing on the upper surface of the corresponding symbol blocks having a unique sound representation.

In such an arrangement, the casing 70 is moulded so that the symbol blocks 75a, 75b etc. are accommodated within the receptacles 73a, 73b etc. with a small clearance above the respective light sources 77a, 77b etc. This permits light emitted by the light sources 77a, 77b etc. to be reflected from the lower surface of the corresponding symbol blocks, the casing 70 being bevelled so as to permit the reflected light beam to enter normally therethrough without refraction. The reflected beam subsequently propagates along the corresponding light channels by means of total internal reflection, facilitated by means of the light reflective coating on the outer surfaces of the light channels.

Referring to Fig. 9 of the drawings there is shown a further embodiment of the invention which will be explained with regard to Latin script language alphabetic symbols. There is shown a casing 90 having therein a plurality of slots 91, 92, 93 etc. for inserting therein corresponding card-shaped symbol blocks 94a, 94b, 94c etc.

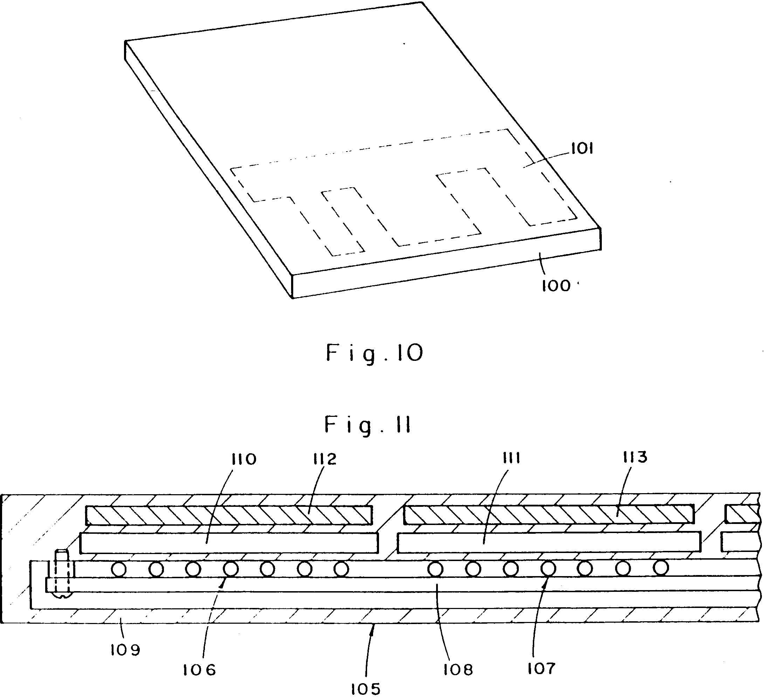

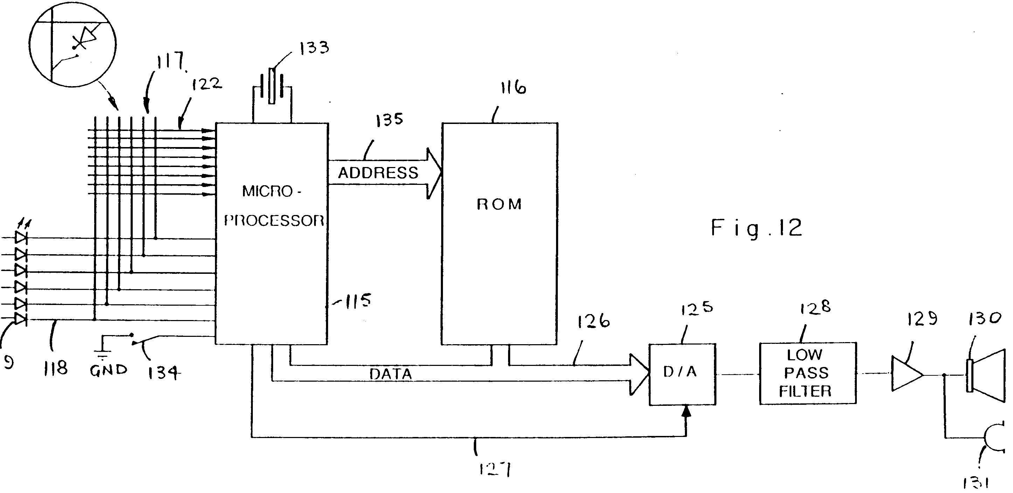

On an upper surface of each of the symbol blocks 94a and 94b is displayed a cosonant-vowel combination such as "PO" and "NY" whose corresponding digital sound representations *POE* and *NEE* are stored within the ROM 1. The alphabetic symbols appearing on each of the symbol blocks 94a, 94b etc. may be encoded by means of recesses in corresponding rear edges of the symbol blocks. Alternatively, magnetic means may be employed either as described above with reference to Figs. 3 and 4 of the drawings, or as will shortly be described with reference to Figs. 10 and 11 of the drawings.

The device shown in Fig. 9 functions in a similar manner to that described above with reference to Fig. 3 of the drawings. The ROM 1 is enabled when the slot currently being scanned contains a symbol block therein, thereby allowing the corresponding address locations within the ROM 1 to be read so as to produce corresponding analogue sound waveforms which are reproduced by the loudspeaker 11.

Referring now to Figs. 10 and 11 of the drawings there is shown in Fig. 10 an alternative arrangement for encoding the symbol blocks 94a, 94b shown in Fig. 9 and, in Fig. 11, a corresponding decoding means. Thus there is shown a substantially card-shaped symbol block 100 having on a lower inside surface thereof a ferromagnetic plate 101 such as steel, arranged in a predetermined pattern. A decoding means shown generally as 105 comprises a plurality of reed switches 106, 107 etc. mounted on a printed circuit board 108 fixed to a casing 109 and aligned with corresponding slots 110, 111 etc. formed therein. Also mounted within the casing 109 on a side of the slots 110 and 111 remote from the respective reed switches 106 and 107, are permanent magnets 112 and 113. The magnets 112 and 113 produce corresponding magnetic fields which bias the respective reed switches 106 and 107 so that all of the reed switches are closed. On introducing the symbol block 100 into the slots 110 or 111, the ferromagnetic plate 101 cuts the magnetic field produced by the magnets 112 or 113 so that those reed switches which are aligned with the ferromagnetic plate 101 change state. The ferromagnetic plate 101 thus acts as a magnetic shunt which cuts the magnetic bias in respect of predetermined ones of the reed switches so that the resulting state of the reed switches provides a binary code unique for each different sound associated with the symbol blocks.

Whilst the invention has been described with particular reference to a ROM for storing therein digitised voice samples, it will be appreciated that any other suitable voice synthesizing means may equally well be employed. Thus, for example, the voice synthesizing means may include a microprocessor suitably programmed to produce digitised sound samples corresponding to different codes generated by the decoding means.

Referring to Fig. 12 of the drawings there is shown such a system in which a MICROPROCESSOR 115 effects voice synthesis in accordance with an instruction set stored in a read only memory (ROM) 116 coupled thereto. Six receptacles or slots (not shown) are scanned through a diode matrix designated functionally as 117 constituting the SLOTS SCANNER 2 described in detail above with reference to Figs. 1 and and 2 of the drawings. The diode matrix 117 is coupled to a SCAN-OUT line 118 in respect of each receptacle corrected between an output port of the MICROPROCESSOR 115 and the positive supply rail Vcc via a light emitting diode (LED) 119 in series with a pull-up resistor 120.

In similar manner, the diode matrix 117 is connected to eight SCAN-IN lines 122 each of which is corrected to a corresponding input port of the MICROPROCESSOR 115. A D/A (digital-to-analogue) CONVERTER 125 is corrected to both the MICROPROCESSOR 115 and to the ROM 116 via a common DATABUS 126 and a STROBE LINE 127. An output of the D/A CONVERTER 125 is corrected to a LOW PASS FILTER 128 whose output is fed to an amplifier 129 coupled to a loudspeaker 130 and to an earphone jack 131.

The MICROPROCESSOR 115 is clocked by a QUARTZ CRYSTAL 133. A speed control switch 134 coupled between the MICROPROCESSOR 115 and GND is sensed by the MICROPROCESSOR 115 which adjusts the frequency at which the SCAN-OUT lines 118 are scanned, such that in one position of the speed control switch 134 the sound of the scanned consonant-vowel combination is reproduced distinctly whilst in the other position the scanning frequency is increased such that the sounds associated with successively scanned consonant-vowel combinations are concatenated, thereby emulating the build-up of a complete word. The speed control switch 134 mat also influence the voice synthesizing algorithm.

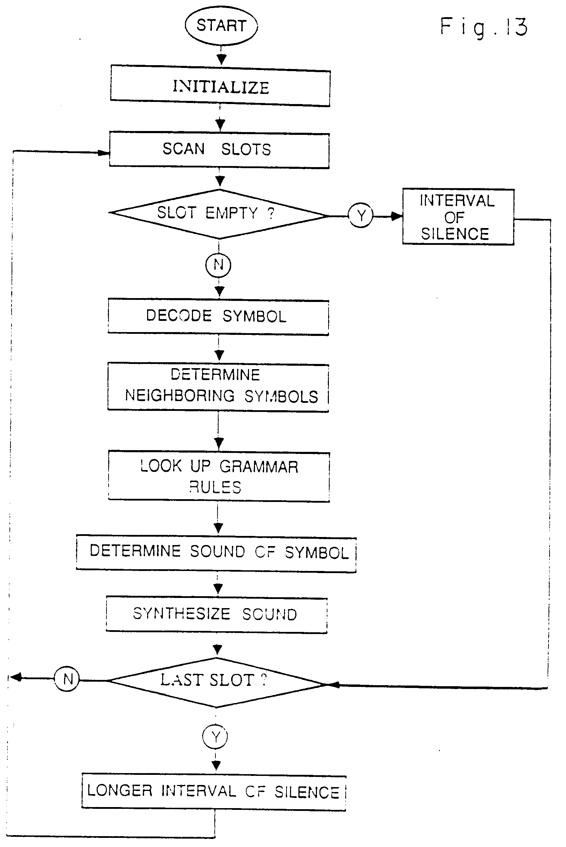

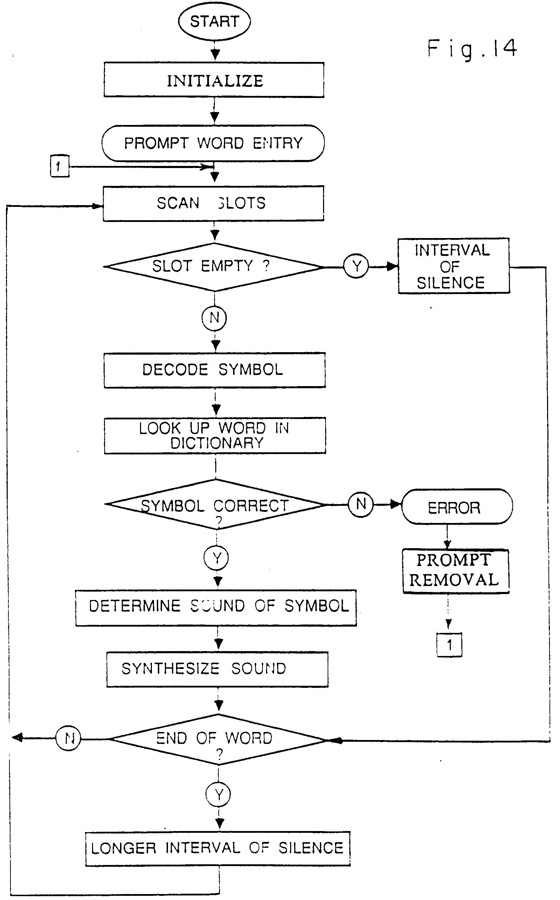

The operation of the system is as follows. Upon encountering a symbol block in one of the receptacles, the code corresponding to the displayed symbol is fed to the MICROPROCESSOR 115 along the SCAN-OUT lines 122. The MICRO-PROCESSOR 115 operates under the control of an instruction set also stored in the ROM 116 and described in greater detail below with reference to Figs. 13 and 14 of the drawings. Essentially, under control of the stored instruction set, the MICROPROCESSOR 115 is responsive to the language of the symbol blocks being used and to a set of grammar rules relating to the language and stored in the ROM 116, for locating the appropriate sound stored within the ROM 116 and which is addressed by the MICROPROCESSOR 115 via an ADDRESS BUS 135.

As each receptacle is successively scanned, the corresponding SCAN-OUT line 118 goes low (approximately 0 V), whereupon the corresponding LED 119 is illuminated on account of the current passing from the positive supply rail Vcc through the LED 119 to the MICROPROCESSOR 115. The pull-up resistor 120 reduces the current passing through the LED 119 to a safe level. By this means, a visual indication is given as to which symbol block is being scanned so that the student can immediately associate the synthesized sound with the appropriate symbol block.

The data samples corresponding to the synthesised sound stored in the ROM 116 at the address appearing on the ADDRESS BUS 135 is passed via the DATABUS 126 whence it is converted into a voice signal by the D/A CONVERTER 125. The D/A CONVERTER 125 receives timing signals via the STROBE LINE 127 under direction of the MICROPROCESSOR 115 which informs the D/A CONVERTER 125 when a voice sample is ready on the DATABUS 126 for analogue conversion.

The resulting analogue voice signal is smoothed by the LOW PASS FILTER 128, amplified by the audio amplifier 129 and then rendered audible either by means of the loud-speaker 130 or, alternatively, by means of an earphone plugged into the earphone jack 131.

Referring now to Fig. 13 of the drawings, there is shown a flow diagram illustrating the principal operating steps associated with the instruction set stored in the ROM 116 shown in Fig. 12 in accordance with a fifth embodiment of the invention.

For each different language a specific ROM 116 is prepared containing therein a set of basic phonemes as well as a set of grammatical rules including the direction of reading and writing (i.e. left to right or vice versa) and rules of pronunciation. The latter indicate how a symbol is pronounced as a function of its location relative to the symbols in neigbouring symbol blocks.

On energising the circuit, the MICROPROCESSOR 115 starts the scanning process, starting with the first slot (extreme left or right depending on the language stored in the ROM 116). The MICROPROCESSOR 115 outputs a logical "0" at the SCAN-OUT line 118 corresponding to the slot (or receptacle) being scanned and reads the code associated with the symbol on the upper surface of the symbol block therein.

In the event of a slot being empty, the. MICROPROCESSOR 115 transmits samples representing silence so as to produce a short interval of silence. Alternatively, when a symbol block is present, the symbol appearing on the upper face thereof is decoded in accordance with any one of the embodiments described in detail above with reference to Figs. 3 to 8 of the drawings. The sound associated with the symbol is synthesized in accordance with the grammatical rules stored in the ROM 116 and with due regard to the selected speed which determines the length of each vocal representation. Between the vocalisation of successive symbols, an interval of silence ensues whose duration is likewise determined by the selected speed. Thus, at the slow speed setting each symbol is vocalised separately, there being a measurable silence between the sound associated with successive symbols. However, at the fast speed setting, the time between successive vocalisations is so short that the sounds merge one into the next, giving the effect of vocal continuity.

In some languages such as Arabic, Hebrew and some of the Slavic languages, once the symbol block has been decoded, its correct pronunciation is unambiguously defined bemuse the sound associated with any consonant-vowel combination is context-independent. In other languages such as Spanish, the pronunciation of some of the basic consonant-vowel combinations have a measure of context dependency which can be resolved by the MICROPROCESSOR 115. Thus, for example, a symbol may have a different vocalisation depending on its location within a word and thus, by considering the neighbouring symbols, the correct vocalisation of a symbol is determinate.

However, in languages such as English, for example, this is by no means the case and the correct pronunciation associated with a symbol can only be determined by reference to the context in which the symbol appears. Thus, for example, the pronunciation associated with the symbol "CA" is quite different in the word "CAN" and in the word "CAR".

In the case where the student constructs a word of his own choice, there is no way in which the MICROPROCESSOR 115 can determine after insertion of the first symbol "CA" whether the next symbol will be "N" or, alternatively, "R", for example. Consequently, in this situation there exists an inevitable ambiguity associated with English and similar languages, until all the symbols associated with a complete word have been inserted into their respective slots, whereupon the MICROPROCESSOR 115 can determine the correct pronunciation of the complete word with reference to a dictionary of words stored in the ROM 116. However, often the correct pronunciation of a symbol may be determined by reference to neighbouring symbols in accordance with the grammar rules stored in the ROM 116 in respect of the language for which the ROM 116 is customised.

Consider, for example, the symbol "CO". If the next symbol is "NI", then even though a complete word has not yet been constructed, the rules of English grammar dictate that the first symbol "CO" is pronounced with a short "o" as in such words as "conical", "comical", "cost" and so on. If, on the other hand, the next symbol block is "HE", then, in accordance with the rules of English grammar, it is clear that the first symbol is pronounced with a long "o" as in such words as " cohesive ", " coherent ", and so on.

In this way, as more symbol blocks are inserted into successive receptacles, the correct pronunciation associated with preceding symbol blocks becomes clearer and, by reproducing the sound of each symbol as successive symbol blocks are inserted, any previous ambiguity associated with the pronunciation of preceding symbols may be iteratively removed.

When the SLOTS SCANNER determines that a complete word has been scanned (there being no more symbol blocks in subsequent slots ), a longer time interval ensues, after which the complete word is cyclically scanned and, at this point, since all of the symbol blocks constituting the complete word are now present, the correct pronunciation associated with each symbol may be unambiguously determined and reproduced in accordance with the dictionary stored in the ROM 116.

With languages such as English, there will always exist some consonant-vowel combination combinations for which the correct pronunciation of each consonant-vowel combination is indeterminate until subsequent consonant-vowel combinations are added. Consider, for example, the same example given above where the first symbol is "CO". If the symbol "AX" is now added, the correct pronunciation of the first symbol "CO" is still indeterminate since there is no immediate way of knowing whether the word being constructed is "COAX" or "COAXER" or "COAXIAL" and so on. As has been explained above, one way of overcoming this problem is to allow the possibility of error until the complete word has been constructed, whereupon by recourse to the in-built dictionary within the ROM 116, any indeterminacy may be completely avoided.

Fig. 14 shows the principal operating steps associated with an instruction set for controlling the MICROPROCESSOR 115 in accordance with a sixth embodiment of the invention. The method of operation in this case is somewhat different from that described above with reference to Fig. 13 and avoids the problem of context indeterminacy. In this configuration, there is stored within the ROM 116 a set of preselected words in the language for which the ROM 116 is customised. Also stored is a precise description as to how each component consonant-vowel combination within each word is vocalised. Additionally, the direction of reading and writing the customised language is stored so that the correct direction of scanning is known.

On energising the circuit, the user is prompted to enter a specific word. The initial steps are similar to those described with reference to Fig. 13 except that in this case as each symbol block is inserted into the corresponding slot, the symbol appearing on the upper face thereof is decoded and checked against the dictionary within the ROM 116 in order to determine whether the correct symbol has been entered. If not, a suitable error message is given and persists until the user removes the incorrect symbol block and substitutes the correct symbol block. If, on the other hand, the correct symbol block were entered, then since, in this case, the system knows the correct context in which the symbol appears (since the system knows what word to expect), the correct pronunciation is known to the system and the appropriate sound may therefore be synthesized.

In the preferred embodiments described above, the analogue sound waveforms are digitised using Pulse Code Modulation (PCM). Whilst this achieves excellent voice synthesis, a drawback with such a technique is that a relatively large number of bits of data are required for representing each analogue voltage level. Consequently, Adaptive Differential Pulse Code Modulation (ADPCM) may be used for achieving good data compression whilst preserving reasonable quality of voice synthesis.

According to another technique, the sounds are synthesized using Linear Predictive Coding (LPC) which permits a digital representation corresponding to an analogue sound waveform to be predicted from a knowledge of a relatively simple number of digitised samples thereof. Such a technique is highly economical in terms of memory requirement albeit at the expense' of quality of voice synthesis.

In the preferred emboddiment, the SLOTS SCANNER operates at a preselected frequency determined by the selector switches 19 and 25. The SLOTS SCANNER can be adapted to operate in several different ways. If it operates continuously, then the sounds of each sequence of displayed symbols are produced cyclically. In such an arrangement, to consider the embodiment described with reference to Fig. 9 of the drawings as an example, when the first symbol block bearing the symbol "PO" is inserted into the first slot, the sound POE will be repeated at a rate dependent on the frequency of the SLOTS SCANNER. As the second symbol block bearing the symbol "NY" is inserted into the second slot, the combined sound representations *POE* and *NEE* will be repeated cyclically dependent on the frequency of the SLOTS SCANNER. By this means, the user is relieved of the need to memorise the sounds associated with previously inserted symbol blocks.

By adding simple logic circuitry it is possible to so arrange the SLOTS SCANNER that the sound representation *POE* is given only when the first symbol block is inserted into its respective slot, the device remaining silent until the second symbol block bearing the symbol *NY* is inserted into the second slot, whereupon the sound representation *NEE* is produced.

In another embodiment, a switch ( constituting an actuation means ) may be coupled to the scanning means such that the scanning means starts scanning only upon operation of the switch. In such an arrangement, a student may insert as many symbol blocks as he wishes without receiving any feedback as to their correctness until the actuation means is operated.

In yet another embodiment, the scanning means may be adapted, either automatically or on actuation of a suitable switch, to return to the first slot so as to reproduce each of the sounds corresponding to the alphabetic symbols displayed in the respective slots. Thus, in the above example, on inserting the second symbol block into the second slot, the sound *NEE* would be reproduced followed immediately by the combination *POE NEE*.

It will also be understood that whilst several preferred arrangements have been described relating to the SLOTS SCANNER, these are not intended to be exhaustive. Thus, other types of scanners may equally well be employed, such as a bar code scanner, for example. Likewise, the SLOTS SCANNER may be at least partially provided by means of a microprocessor as shown in Fig. 12, for example.

The provision of the earphone jack 131 permits the user to hear the sounds through an earpiece coupled thereto, thereby permitting him to concentrate more easily. Likewise, the LEDs 119 which are successively illuminated as each symbol block is scanned and decoded also help the student to concentrate currently scanned symbol and the resulting sound. This is particularly important when continuous scanning is performed since, without such visual indication, with which symbol a particular sound was associated.

A further aid to concentration and to correct pattern recognition may be provided by representing all of the consonants in one colour and each of the vowels in a respective different colour. Thus, for example, the symbol "CA" may have a black "C" and a red "A" whilst the symbol "CO" may have a black "C" and a green "O". This permits the student to see at a glance the visual distinction between different symbols and thus to recognise the different sounds as a function of that distinction.

It will also be understood that, whilst the invention has been described with general reference to an educational device, such an educational device may have many applications. For example, the principles of the invention may be employed in an educational toy for teaching children to read and write but are especially suited for teaching people with learning difficulties' such as dyslexia. Furthermore, if the alphabetic symbols are represented in braille, the device could equally well be used for teaching blind people to read in a manner which permits self-training interactively and can be done even without a teacher.

Thus, the invention provides a simple educational device by means of which a student can himself construct words by inserting corresponding symbol blocks into respective receptacles, there being immediately provided a vocal indication of how each consonant-vowel combination of the word sounds as the word is constructed. Such a device is useful as an aid in teaching to read and to spell and represents a significant advance over hitherto proposed educational devices whose output is pre-programmed and incapable of variation according to an interactive dialogue with the user.

## Claims

1. An educational device for aiding the development of reading and writing skills, characterised by:

    a plurality of symbol blocks (42, 50, 75a, 75b, 75c, 75d, 94a, 94b, 94c, 100) each having an alphabetic symbol representing a predetermined consonant-vowel combination on at least one surface thereof and having associated with said at least one surface a respective predetermined encoding means (43a, 43b, 43c, 52, 81a, 81b, 81c, 101),

    a casing (40) containing a plurality of receptacles (41a, 41b, 58a, 58b, 73a, 73b, 73c, 73d, 91, 92, 93) each for displaying a surface of a respective one of said symbol blocks inserted therein,

    a plurality of decoding means (45a, 45b, 57a, 57b, 71a, 77a, 71b, 77b, 71c, 77c, 71d, 77d, 76, 105) within the casing each associated with a respective one of the receptacles and responsive to the encoding means of the symbol block inserted therein for generating a code corresponding to the alphabetic symbol appearing on the displayed surface of the symbol block,

    voice synthesizing means (1, 115, 116) for coupling to a selected one of the decoding means (45a, 45b, 57a, 57b, 71a, 77a, 71b, 77b, 71c, 77c, 71d, 77d, 76, 105) and responsive to the code generated thereby for synthesizing a sound corresponding to the alphabetic symbol represented by said code,

    scanning means (2, 15, 115, 117) for successively coupling each of the decoding means to the voice synthesizing means (1, 115, 116), and

    audio output means (11, 130, 131) coupled to the voice synthesizing means (1, 115, 116) for reproducing the sound audibly.

2. The device according to Claim 1, wherein:

    each encoding means comprises a predetermined arrangement of spaced apart recesses (43a, 43b, 43c) in an edge of the symbol block associated with a surface thereof, and

    each decoding means comprises a series of spaced apart switches (45a, 45b) adapted to be operated by a surface of the symbol block not having one of said recesses therein.

3. The device according to Claim 1, wherein:

    each encoding means comprises a predetermined pattern of magnetic arterial (52) on an internal surface (51) of the symbol block (50), and

    each decoding means comprises a, plurality of magnetically operated switches (57a, 57b) responsively coupled to said pattern when the symbol block is inserted into the receptacle so that corresponding ones of the switches close.

4. The device according to Claim 1, wherein:

each encoding means comprises a predetermined pattern of ferromagnetic material (101) on an internal surface of the symbol block (100), and

each decoding means (105) comprises a plurality of magnetically operated switches (106, 107);

the device further including a magnet (112, 113) for producing a magnetic field which biases said switches into a first position, whereby inserting a symbol block into one of the receptacles cuts the magnetic field within a region of said pattern so that corresponding ones of the switches are switched to a second position.

5. The device according to Claim 1, wherein:

each encoding means comprises a predetermined number of light reflective areas (81a, 81b, 81c) arranged in a predetermined pattern on an external surface (80) of the symbol block, and

each decoding means comprises:

a light source (77a, 77b, 77c, 77d) for impinging on said pattern so as to reflect a reflected beam of light from each one of said light reflective areas,

a plurality of spaced apart light channels (71a, 71b, 71c) each for collecting a respective one of the reflected beams and propagating it to an end thereof, and

detector means (76) at the end of each of the light channels and responsive to the propagated beam therein for generating an electrical signal.

6. The device according to any one of Claims 1 to 5, wherein:

the symbol blocks (94a, 94b, 94c) are substantially card-shaped having an alphabetic symbol on at least one side thereof, and

the receptacles are slot-shaped (91, 92, 93) for accommodating an edge of the symbol block therethrough.

7. The device according to any one of Claims 1 to 5, wherein:

the symbol blocks are polyhedral (42, 50, 75a, 75b, 75c, 75d) having a plurality of facets each bearing an alphabetic symbol.

8. The device according to any one of the preceding claims, wherein:

the scanning means (2, 15, 115, 117) operates at a preselected frequency, and

selector means (3, 19, 25, 134) are provided for varying said frequency.

9. The device according to any one of the preceding claims, wherein the scanning means (2, 15, 115, 117) operates continuously whereby the sounds of each sequence of displayed symbols are reproduced cyclically.

10. The device according to any one of Claims 1 to 8, wherein the scanning means (2, 15, 115, 117) operates as each symbol block is successively inserted into an available receptacle, whereby the sound associated with the symbol displayed on the inserted symbol block is reproduced.

11. The device according to Claim 10, wherein the scanning means (2, 15, 115, 117) returns to the decoding means (45a, 45b, 57a, 57b, 71a, 77a, 71b, 77b, 71c, 77c, 71d, 77d, 76, 105) associated with a first displayed symbol of a sequence of displayed symbols, whereby after reproducing the sound of the inserted symbol block, each sound associated with the complete sequence is then reproduced.

12. The device according to any one of Claims 1 to 9, further comprising:

actuation means coupled to the scanning means whereby the scanning means starts scanning only upon operation of the actuation means.

13. The device according to any one of the preceding claims, wherein the voice synthesizing means (1; 116) includes a read only memory (ROM).

14. The device according to any one the preceding claims, wherein the scanning means are at least partially provided by a microprocessor (115).

15. The device according to any one of the preceding claims, wherein the voice synthesizing means are at least partially provided by a microprocessor (115).

16. The device according to Claim 1, wherein:

the voice synthesizing means are at least partially provided by a microprocessor (115), and

a memory (116) is coupled to the microprocessor (115) for storing an instruction set for controlling the microprocessor.

17. The device according to Claim 16, wherein there is stored within the memory (116) a dictionary of words in respect of at least one language and a set of rules for indicating how each component consonant-vowel combination of the word is pronounced.

Fig.1

EP 0 471 572 A1

Fig.2

Fig.3

EP 0 471 572 A1

EP 0 471 572 A1

50

52  51

Fig. 4

55

58 b  58 a

56  57b  57a

Fig. 5

Fig.8

Fig.6

Fig. 7

Fig.9

Fig. 10

Fig. 11

Fig.12

Fig.13

START

↓

INITIALIZE

↓

SCAN SLOTS

↓

SLOT EMPTY ? —Y→ INTERVAL OF SILENCE

N
↓

DECODE SYMBOL

↓

DETERMINE NEIGHBORING SYMBOLS

↓

LOOK UP GRAMMAR RULES

↓

DETERMINE SOUND OF SYMBOL

↓

SYNTHESIZE SOUND

↓

N← LAST SLOT ?

Y
↓

LONGER INTERVAL OF SILENCE

Fig. 14

```
                        ( START )
                            │
                            ▼
                  ┌───────────────────┐
                  │     INITIALIZE     │
                  └───────────────────┘
                            │
                            ▼
                  ( PROMPT WORD ENTRY )
    ┌─┐                     │
    │1│────────────────────►│
    └─┘                     ▼
                  ┌───────────────────┐
          ┌──────►│     SCAN SLOTS    │
          │       └───────────────────┘
          │                 │
          │                 ▼                        ┌──────────┐
          │            SLOT EMPTY ? ────(Y)────────► │ INTERVAL │
          │                 │                        │    OF    │
          │                (N)                       │ SILENCE  │
          │                 │                        └──────────┘
          │                 ▼                              │
          │       ┌───────────────────┐                    │
          │       │   DECODE SYMBOL   │                    │
          │       └───────────────────┘                    │
          │                 │                              │
          │                 ▼                              │
          │       ┌───────────────────┐                    │
          │       │  LOOK UP WORD IN  │                    │
          │       │    DICTIONARY     │                    │
          │       └───────────────────┘                    │
          │                 │                              │
          │                 ▼                              │
          │          SYMBOL CORRECT ────(N)────► ( ERROR ) │
          │                 ?                         │     │
          │                (Y)                        ▼     │
          │                 │                  ┌──────────┐ │
          │                 ▼                  │  PROMPT  │ │
          │   ┌───────────────────────┐        │ REMOVAL  │ │
          │   │ DETERMINE SOUND OF SYMBOL       └──────────┘ │
          │   └───────────────────────┘            │        │
          │                 │                       ▼        │
          │                 ▼                      ┌─┐       │
          │       ┌───────────────────┐            │1│       │
          │       │  SYNTHESIZE SOUND │            └─┘       │
          │       └───────────────────┘                     │
          │                 │                                │
          │                 ▼                                │
          ◄───(N)─── END OF WORD ◄──────────────────────────┘
          │                 ?
          │                (Y)
          │                 │
          │                 ▼
          │   ┌────────────────────────────┐
          │   │ LONGER INTERVAL OF SILENCE │
          │   └────────────────────────────┘
          │                 │
          └─────────────────┘
```

## EUROPEAN SEARCH REPORT

**European Patent Office**

Application Number

EP 91 30 7521

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 310 766 (VIDEO TECHNOLOGY ELECTRONICS) * abstract; column 5, line 58 - column 7, line 47; column 1, line 6 - column 12, line 52; figures 1-4,6 * | 1,2,7, 10-17 | G 09 B 17/00 G 09 B 5/04 G 10 L 5/04 |
| A | --- | 9 | |
| A | FR-A-2 300 379 (DEPITRE) * whole document * | 1,10 | |
| A | FR-A-2 597 243 (BEHAR) * abstract; page 1, line 30 - page 2, line 20; page 2, line 27 - page 3, line 27; figures 1-5 * | 1,6 | |
| A | GB-A-2 175 432 (FU-YUAN SHIH) * whole document * | 1,10,11 | |
| A | GB-A-2 186 415 (MARVIN GLASS) * abstract; page 1, lines 67-88; page 1, line 122 - page 2, line 25; figures 1-3 * | 1,5,6, 12-17 | TECHNICAL FIELDS SEARCHED (Int. Cl.5) |
| A | US-A-3 995 145 (HARRIS) * abstract; column 7, lines 27-53; figures 7,10 * | 3,4 | G 09 B 17/00 G 09 B 5/00 G 09 B 19/00 G 09 B 21/00 |
| A | US-A-3 999 023 (SEDLEY) * whole document * | 3 | |
| A | US-A-3 465 131 (EYCK) * column 2, line 19 - column 3, line 21; column 3, lines 33-48; figures 2-4,6 * --- -/- | 3,4 | |

The present search report has been drawn up for all claims

| Place of search | Date of completion of the search | Examiner |
|---|---|---|
| BERLIN | 11-11-1991 | BEITNER M.J.J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

Page 2

# European Patent Office

# EUROPEAN SEARCH REPORT

Application Number

EP 91 30 7521

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 756 489 (MAGNET-REGELTECHMIK GMBH & CO KG) ----- | 3,4 | |
| | | | TECHNICAL FIELDS SEARCHED (Int. Cl.5) |

The present search report has been drawn up for all claims

| Place of search | Date of completion of the search | Examiner |
|---|---|---|
| BERLIN | 11-11-1991 | BEITNER M.J.J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                             
& : member of the same patent family, corresponding document

EPO FORM 1503 03.82 (P0401)